# EUROPEAN PATENT APPLICATION

(11) **EP 1 770 874 A1**
(43) Date of publication of application: **04.04.2007**
(21) Application number: 05292019.6
(22) Date of filing: 28.09.2005
(51) Int. Cl.: H04B 7/08, H01Q 13/10, H01Q 9/16, H01Q 1/24, H01Q 21/24, H01Q 21/29

(54) **Antenna system for a radiocommunication station, and radiocommunication station having such antenna system**

(71) Applicant: Nortel Networks Limited, St Laurent, Québec H4S 2A9 (CA)
(72) Inventor: Lucidarme, Thierry, 78180 Montigny-Le-Bretonneux (FR); Ben Rached, Nidham, 75017 Paris (FR)
(74) Representative: Loisel, Bertrand

(57) **Abstract**

The antenna system for a radiocommunication station has a plurality of antenna elements (8-10) having different polarizations and arranged for coupling with RF electric field components oriented along three mutually perpendicular directions.

## Description

The present invention relates to antenna systems for radiocommunication stations.

Most radiocommunication stations use dipoles as antenna elements. The dipole is sensitive to RF electromagnetic waves having the electric field parallel to the direction of the dipole.

It is known to arrange dipoles having two different orientations so that the station can transmit or receive radio waves having different polarizations of the electric field E. In the "cross-polarization" arrangement two dipoles are disposed at right angles in a common plane. This makes the antenna sensitive to both the horizontal and the vertical polarization of the electric field E, or to a circular polarization if used with suitable RF couplers (see WO 97/37440).

Another common type of antenna element consists of a slot cut in a metallic plane and fed across the two lateral edges of the slot. The slot antenna has a radiation diagram dual of the dipole, i.e. it is sensitive to RF electromagnetic waves having the magnetic field H parallel to the direction of the slot. A radiocommunication base station equipped with a slot antenna is disclosed in WO 99/60657. A radiocommunication handset equipped with a slot antenna is disclosed in US-A-6,462,714.

In the fixed stations deployed by cellular operators, the antenna typically consists of an array of antenna elements such as dipoles or cross-polarization elements. The arrayed elements are fed with suitable phase shifts to provide directivity, for example for the station to serve a sector-shaped cell.

Antenna systems having different polarizations are used to improve the characteristics of the transmission system. Polarization diversity can be used on the transmitting side and/or on the receiving side. By transmitting a signal on two polarization states, the probability that it is correctly received increases. Likewise, the receiver obtains a gain by listening to more than one polarization and combining the signals received on the different polarization states.

Another field in which antennas having multiple polarities become popular is that of multiple input - multiple output (MIMO) systems. In the MIMO scheme, signal components carrying different information are transmitted along different paths. The paths can be distinguished spatially or by the polarization state of the signals. The receiver also has a multiple antenna and performs an estimation of the transfer matrix from the antenna system of the transmitter to that of the receiver. If the antennas are sufficiently decorrelated, which is usually the case when perpendicularly polarized antennas are considered, the transfer matrix can be inverted to recover the different signal components. This MIMO scheme increases the system throughput.

In a handheld terminal, it is not easy to ensure spatial decorrelation of the antenna elements because the dimensions are small. Polarization diversity is rather used, with two dipole elements arranged perpendicular to each other and parallel to the front face of the terminal. This makes it possible to achieve second order reception diversity or second order MIMO. However, a limitation is that the waves having their electric field components perpendicular to the dipoles are not sensed.

An object of the present invention is to provide an antenna system which makes it possible to take advantage of as many signal components as possible in a diversity or MIMO scheme.

The invention thus proposes an antenna system for a radiocommunication station, comprising a plurality of antenna elements having different polarizations and arranged for coupling with RF electric field components oriented along three mutually perpendicular directions.

The station is suitable for transmitting and/or receiving RF waves having any polarization direction for the electric field. It is thus possible to avoid insensitivity to certain signal components, which increases the performance of the transmission system either by providing more polarization diversity or by adding potentially interesting MIMO propagation channels.

In an advantageous embodiment, particularly adapted to small-sized stations such as handsets, at least one of the antenna elements comprises a slot antenna element. Such slot antenna element can be arranged with its metal plane parallel to a front face of the station, while providing sensitivity to electric field components perpendicular to that front face. It can also be arranged along a lateral face of the station with the slot oriented perpendicular to the thickness of the station.

A dipole antenna element having the same orientation as the slot antenna element is preferably used for electric field components parallel to the slot.

Another aspect of the present invention relates to a radiocommunication station, comprising transceiver circuits and an antenna system as defined above connected to the transceiver circuits.

Other features and advantages of the invention will become apparent from the following description of non-limiting exemplary embodiments, with reference to the appended drawings, in which:
- figure 1 is a schematic view of an antenna system according to the invention, suitable for a cellular radiocommunication base station;
- figure 2 is a schematic view of a handheld radiocommunication station according to the invention;
- figure 3 is a graph illustrating the radiation diagram of a slot antenna;
- figures 4-5 are schematic views of other types of antenna systems for handheld radiocommunication stations according to the invention; and
- figures 6-7 are block diagrams of exemplary radiocommunication stations according to the invention.

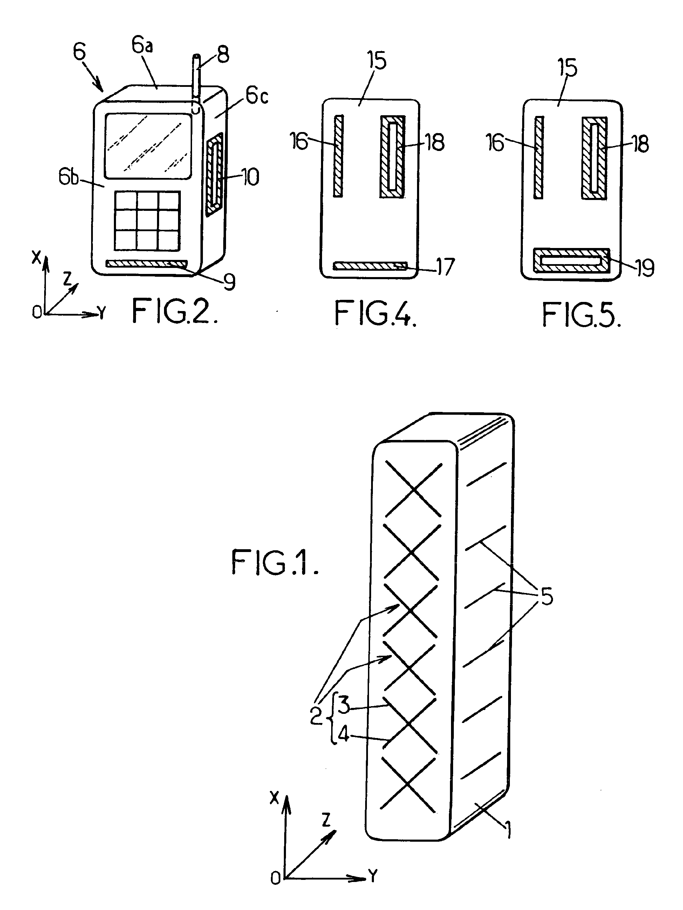

Figure 1 shows an aerial array for a base station of a cellular radiocommunication network. In a conventional manner, it has a facet 1 oriented towards the cell to be served by the station, with a number of antenna elements 2 arrayed on the facet. In the illustrated example, the antenna elements are cross-polarization elements 2, each consisting of two dipoles 3, 4 having a mutual angle of 90°. They are thus arranged to transmit (or to be sensitive to) electromagnetic waves having their electric field parallel to the plane *xOy* the facet 1. The dimensions of the dipole elements 3, 4 are of the order of half of the wavelength used in the communication system. They are arrayed and fed with suitable phase shifts so as to provide the desired directivity in the elevation plane *xOz.*

In accordance with the invention, additional antenna elements 5 are provided in the aerial array, in order to interact with electromagnetic waves having their electric field perpendicular to the facet 1, i.e. parallel to *Oz.* In the example of figure 1, the additional antenna elements are dipoles 5 placed on a lateral face of the antenna system (or on both lateral faces), the dipoles being oriented along *Oz.* The dipoles 5 are arrayed and fed with phase shifts similar to those of the cross-polarized elements 2 in order to provide the same kind of directivity in the elevation plane.

The presence of this type of antenna sensitive to the radial component (*Oz)* of the electric field, and not only to the two other components (*Ox* and *Oy*), is of particular interest in stations installed in an indoor environment, because many objects scatter or diffract the transmitted or received waves in such environment. Advantageously, WiFi or WiMAX types of stations can be fitted with an antenna system according to the invention. In this application, the antenna system will generally not have to be arrayed along direction *Ox* as shown in figure 1.

The layout of the different antenna elements 3, 4, 5 makes it possible to take advantage of all the components of the radiated electric field.

Figure 2 shows a radiocommunication station consisting of a handset 6 having a conventional dipole antenna 8 in the form of a stick or whip protruding along the direction *Ox* at the top 6a of the handset. In order to obtain polarization diversity, a second dipole 9 is arranged perpendicular to the first one 8. To accommodate the second dipole 9 in the small-sized handset 6, it is placed parallel to its front face 6b, along the direction *Oy.* A possibility is to make this dipole 9 as a metallic pattern on a printed circuit board provided in the handset 6.

in a handheld station 6, it is not convenient to arrange dipole elements perpendicular to the front face 6b (as the dipole elements 5 of figure 1). To circumvent this difficulty, it is proposed to use a third antenna element consisting of a radiating slot 10. In the embodiment shown in figure 2, the slot antenna element 10 is disposed along one of the lateral faces 6c of the handset 6, i.e. parallel to the plane *xOz.* The slot 10 is oriented along *Ox,* i.e. parallel to the first dipole 8. It can be made as a metallic pattern on an RF component or cut in a metallic housing or wall provided in the handset.

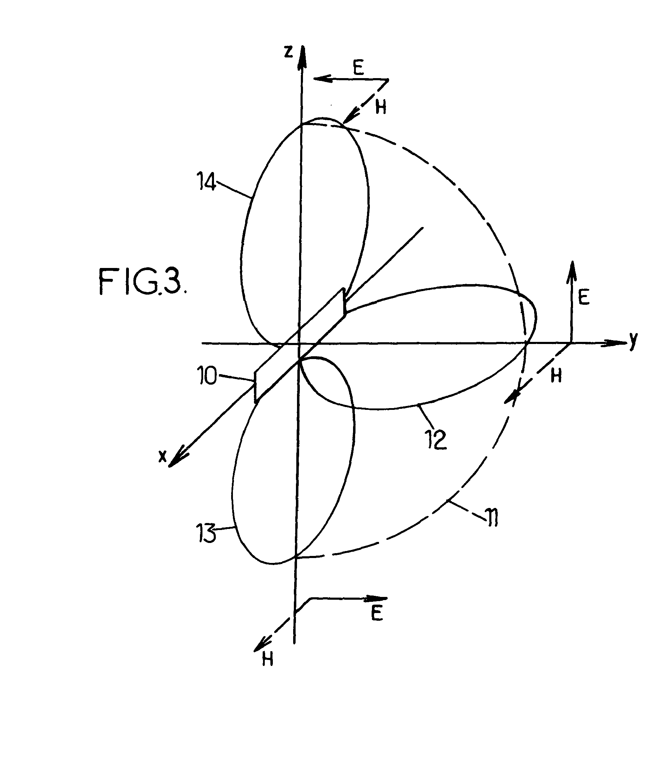

Figure 3 shows the electric field *E* and the magnetic field *H* of a wave produced by a radiating slot 10 formed in a plane *xOz.* Here, *Ox* designates the longitudinal direction of the slot and *Oy* designates the direction perpendicular to the plane *xOz.* The slot 10 is fed with radio-frequency energy from its rear face by means of a conductor parallel to the axis *Oz.* Typical dimensions of the slot are a length of the order of λ/2 (along *Ox)* and a width of λ/10 (along *Oz*), where A is the wavelength of the radiated wave.

A radiating slot 10 of the above kind formed in an infinite conductive plate has a radiation diagram that is the dual of that of the electrical dipole. The figure shows the theoretical radiation diagram of a slot surrounded by an infinite metallic plane. However, in practice, such a diagram is obtained as soon as the extension of the metal around the slot is if the order of λ or even λ/2. This means that the component in which the radiating slot is made can have a width (along *Oz)* of approximately 5 mm for communication frequencies around 2 GHz.

In the direction *Oy* perpendicular to the plane of the slot 10, the electric field vector *E* lies in the direction *Oz* parallel to the plane of the slot and in planes near the plane of the slot *xOz* the electric field vector *E* is perpendicular to the plane of the slot (parallel to *Oy).* Along a semicircle 11 centered on the axis *Ox* (shown in dashed outline in figure 3), the magnetic field vector *H* remains constant and the electric field vector *E* performs a half-turn. The curve 12 shown in figure 3 in the plane *xOy* is an iso*-E* curve in the plane *xOy* along which the electric field vector E is constant and parallel to *Oz.* The curves 13 and 14 are iso-*E* curves situated immediately in front of the plane *xOz,* where the electric field E is parallel to *Oy*.

Therefore, the slot 10 disposed as shown in figure 2 is sensitive to RF electric field components parallel to *Oz* and arriving from the direction *Oy.* It can thus be used in a 3D polarization diversity or MIMO scheme, incombination with the two dipole antenna elements 8-9.

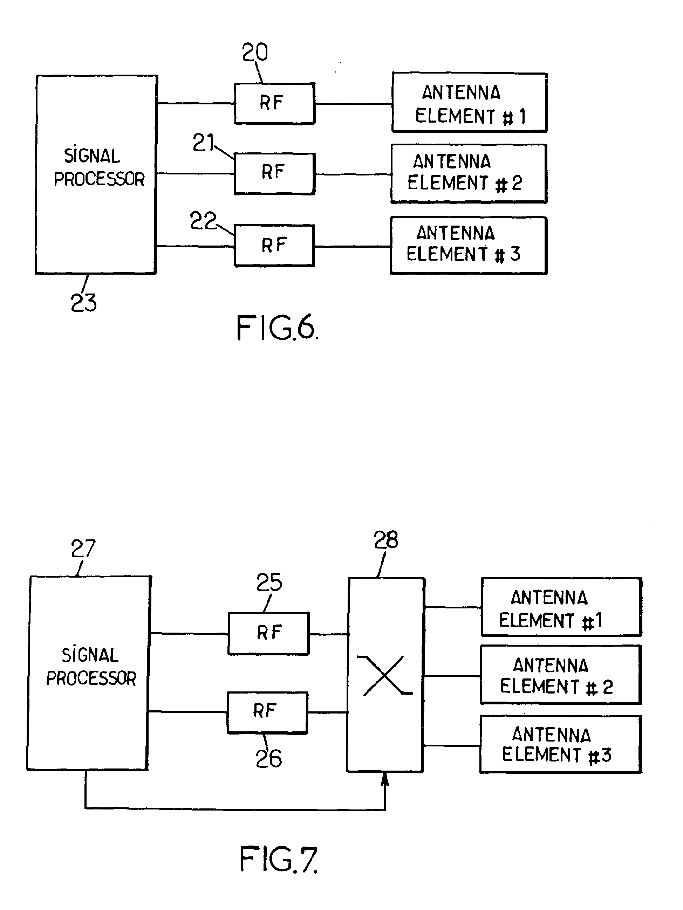

Figure 4 illustrates another possible layout of the antenna elements in a handset according to the invention. Reference 15 designates a plane approximately parallel to the front face 6b of the handset. This plane, which can be that of a printed circuit board, carries the three antenna elements 16-18. The elements 16-17 are dipoles respectively oriented along *Ox* and *Oy,* and play the respective roles of dipoles 8-9 in the embodiment of figure 2.

The third element is a radiating slot 18 oriented along *Ox,* i.e. parallel to dipole 16. From the radiation diagram of the slot, it can be checked that in this configuration too, it is sensitive to RF electric field components parallel to *Oz* and arriving from the direction *Oy.* It will be appreciated that the radiating slot 18 can also be disposed in a plane offset with respect to the plane carrying dipoles 16-17.

In the alternative embodiment of figure 5, the three antenna elements of the handset include two radiating slots 18-19 and one dipole 16. The elements 16, 18 are disposed as in the case of figure 4, and the third element 19 is a slot oriented along *Oy.* In this case, the slots 18-19 are both sensitive to RF electric field components parallel to *Oz* (arriving along *Oy* for 18 and along *Ox* for 19). Slot 18 is also sensitive to RF electric field components parallel to *Oy* (arriving along *Oz).*

In another alternative embodiment, the handset can have only the dipole 8 or 16 and the radiating slot 10 or 18 parallel thereto. With these two antenna elements, it is sensitive to the electric field components along the three mutually perpendicular directions *Ox, Oy* and *Oz.*

Antenna arrangements as discussed above are suitable for both transmission and reception, though for certain applications they can be used in only one direction for which the expected gain is higher. For example, in cellular communications, increasing the order of diversity may be desirable only in the downlink direction, from base stations to mobile stations.

Figure 6 shows schematically the transceiver circuits which can be associated with the three antenna elements of the station as described previously. The three antenna elements are respectively connected to three conventional RF stages 20-22. The RF stages 20-22 can be identical. However, if one (or more) of the antenna elements is used only in the direction of transmission or reception, its RF stage can have only the corresponding transmitting or receiving circuits, without diplexer. A signal processing unit 23 drives the different RF stages in the transmit direction and receives the sensed signal in the reverse direction.

In a transmit diversity scheme, the signal processing unit 23 delivers the same signal to the three RF stages 20-22, or to only two of them. On the transmitter side of a MIMO scheme, the signal processing unit 23 delivers to the three RF stages 20-22, or to only two of them, signals carrying different information.

In a receive diversity scheme, the signal processing unit 23 combines the signals coming from the three RF stages 20-22, or from only two of them, in response to the electromagnetic waves sensed by the three antenna elements. The combination is typically performed using the well-known maximum ratio combining (MRC) method. When the three signal components are exploited, MRC can be applied directly as a weighted summation of the three signal components. Alternatively, second order MRC is applied to the two components received with the highest signal strength. In other words, the processing unit 23 ignores the received component of lowest strength and combines the two other components.

On the receiver side of a MIMO scheme, the signal processing unit 23 receives the signals coming from the three RF stages 20-22, or from only two of them, and analyzes them in a known manner to estimate the transfer matrix of the compound channel and to evaluate the transmitted information.

In the embodiment illustrated by figure 7, there are only two RF stages 25-26 connected to the signal processing unit 27. A 2x3 switching matrix 28 is connected between the two RF stages 25-26 and the three antenna elements. The signal processing unit 23 selects two of the three antenna elements and controls the switching matrix 28 to couple them to the two RF stages 25-26, respectively.

The embodiment of figure 7 is usable at the transmitter end or at the receiver end to increase the order of diversity by means of an antenna hopping method.

The receiver can also probe the signal strength received on the three antenna elements and select those that maximize the signal strength.

## Claims

1. An antenna system for a radiocommunication station, comprising a plurality of antenna elements (3-5; 8-10; 16-18) having different polarizations and arranged for coupling with RF electric field components oriented along three mutually perpendicular directions.

2. The antenna system as claimed in claim 1, wherein at least one of said antenna elements is a slot antenna element (10; 19).

3. The antenna system as claimed in claim 2, wherein one of said antenna elements is a dipole antenna element (8; 16) oriented parallel to said slot antenna element (10).

4. The antenna system as claimed in any one of the preceding claims, wherein said antenna elements comprise three antenna elements (3-5; 8-10; 16-18) respectively sensitive to three mutually perpendicular directions of the RF electric field components.

5. A radiocommunication station, comprising transceiver circuits (20-23; 25-28) and an antenna system connected to the transceiver circuits, wherein the antenna system comprises a plurality of antenna elements (3-5; 8-10; 16-18) having different polarizations and arranged for coupling with RF electric field components oriented along three mutually perpendicular directions.

6. The radiocommunication station as claimed in claim 5, wherein the antenna system comprises three antenna elements (3-5; 8-10; 16-18) respectively sensitive to three mutually perpendicular directions of the RF electric field components.

7. The radiocommunication station as claimed in claim 6, wherein the transceiver circuits comprise a selector (23; 27) for selecting at most two signal components among three signal components respectively sensed by the three antenna elements (3-5; 8-10; 16-18).

8. The radiocommunication station as claimed in claim 5 or 6, wherein the transceiver circuits comprise a combiner (23; 27) for combining signal components sensed by said antenna elements (3-5; 8-10; 16-18).

9. The radiocommunication station as claimed in claim 5 or 6, wherein the transceiver circuits comprise a receiver part (23; 27) configured to apply multiple input - multiple output processing to signal components sensed by said antenna elements (3-5; 8-10; 16-18).

10. The radiocommunication station as claimed in claim 5 or 6, wherein the transceiver circuits comprise a transmitter part (23; 27) configured to distribute RF power radiated by the station between said antenna elements (3-5; 8-10; 16-18).

11. The radiocommunication station as claimed in claim 10, wherein transmitter part (23; 27) is configured to apply to said antenna elements respective signal components carrying different information.

12. The radiocommunication station as claimed in any one of claims 5 to 11, embodied in a handset (6).

13. The radiocommunication station as claimed in claim 12, wherein at least one of said antenna elements is a slot antenna element (10; 19).

14. The radiocommunication station as claimed in claim 13, wherein one of said antenna elements is a dipole antenna element (8; 16) oriented parallel with said slot antenna element (10).

15. The radiocommunication station as claimed in claim 13 or 14, wherein said slot antenna element (10; 19) is disposed parallel to a front face (6b) or along a lateral face (6c) of the handset (6).
